# EUROPÄISCHE PATENTSCHRIFT

(11) **EP 0 909 279 B1**
(45) Veröffentlichungstag und Bekanntmachung des Hinweises auf die Patenterteilung: **25.04.2001**
(21) Anmeldenummer: 97929194.5
(22) Anmeldetag: 17.06.1997
(51) Int. Cl.: C08F 4/602, C08F 10/00

(54) **VERFAHREN ZUR HERSTELLUNG VON GETRÄGERTEN ÜBERGANGSMETALLKATALYSATOREN**
PROCESS FOR PREPARING CARRIER-BORNE TRANSITION METAL CATALYSTS
PROCEDE DE PRODUCTION DE CATALYSEURS DE METAL DE TRANSITION SUR SUPPORT

(30) Priorität: 04.07.1996 DE 19626834; 20.05.1997 DE 19720979
(43) Veröffentlichungstag der Anmeldung: 21.04.1999
(73) Patentinhaber: BASF AKTIENGESELLSCHAFT, 67056 Ludwigshafen (DE)
(72) Erfinder: BIDELL, Wolfgang, D-67112 Mutterstadt (DE); LANGHAUSER, Franz, D-67152 Ruppertsberg (DE); MOLL, Ulrich, D-67487 St Martin (DE); MC KENZIE, Ian, David, Welwyn Garden City AL6 0JY (GB); FISCHER, David, D-67161 Gönnheim (DE); HINGMANN, Roland, D-68526 Ladenburg (DE); SCHWEIER, Günther, D-67159 Friedelsheim (DE); MARCZINKE, Bernd, Lothar, D-67346 Speyer (DE); KERSTING, Meinolf, D-67435 Neustadt (DE); JONES, Peter, John, Vaughan, Wolviston, Billingham, Cleveland (GB); GRASMEDER, John, Russell, 67246 Dirmstein (DE)
(86) Internationale Anmeldenummer: EP9703132
(87) Internationale Veröffentlichungsnummer: WO9801481

(56) Entgegenhaltungen:
- EP-A- 0 685 494
- WO-A-94/07928
- US-A- 5 057 475
- US-A- 5 470 993

## Beschreibung

Gegenstand der vorliegenden Erfindung ist ein Verfahren zur Herstellung eines geträgerten Übergangsmetallkatalysators, welcher ein partikuläres organisches oder anorganisches Trägermaterial, einen Metallocenkomplex und eine metalloceniumionen-bildende Verbindung enthält.

Weiterhin ist Gegenstand der vorliegenden Erfindung ein geträgerter Katalysator erhältlich nach diesem Verfahren, ein Verfahren zur Herstellung von Polymerisaten mittels dieses Katalysators sowie die Verwendung dieser Polymerisate zur Herstellung von Fasern, Folien und Formkörpern.

Geträgerte Übergangsmetallkatalysatoren sind seit langem bekannt und werden beispielsweise zur Olefinpolymerisation eingesetzt. Die Aktivität und Produktivität dieser Katalysatoren hängt dabei wesentlich von ihrem Herstellverfahren ab. Durch die Auswahl der Beladungsparameter wird im allgemeinen versucht, eine ausreichend feste Bindung des Katalysators und gegebenenfalls der Cokatalysatoren an den Träger sowie eine möglichst homogene Verteilung der aktiven Komponenten auf dem Träger zu erreichen.

In WO 94/28034 wird die Herstellung eines geträgerten Katalysators zur Olefinpolymerisation beschrieben, wobei ein Metallocenkomplex zusammen mit einem Alumoxan oder Methylalumoxan in einem flüssigen Kohlenwasserstoff mit einem inerten Träger, typischerweise Kieselgel, in Kontakt gebracht wird und anschließend das Lösungsmittel durch Destillation entfernt wird.

In EP-A1-295 312 werden verschiedene Verfahren zur Herstellung von geträgerten Olefinpolymerisationskatalysatoren beschrieben. Gemeinsames Merkmal dieser Verfahren ist, daß eine Lösung eines Aluminoxans mit einem zweiten Lösungsmittel, in welchem das Aluminoxan unlöslich ist, in Gegenwart eines partikulären organischen oder anorganischen Trägers in Kontakt gebracht wird, wodurch sich das Aluminoxan auf dem Träger niederschlägt. In den verschiedenen Ausführungsformen wird entweder schrittweise zuerst das Aluminoxan und nachfolgend ein Metallocenkomplex auf dem Träger abgeschieden, oder es wird gleichzeitig eine Mischung von Aluminoxan und Metallocenkomplex abgeschieden.

Die genannten Herstellverfahren führen jedoch zu geträgerten Katalysatoren, die hinsichtlich ihrer Aktivität und Produktivität noch zu wünschen übrig lassen.

Der vorliegenden Erfindung lag daher die Aufgabe zugrunde, ein Herstellverfahren für geträgerte Metallocenkatalysatoren zu finden, welches zu Katalysatoren höherer Produktivität führt.

Demgemäß wurde ein Verfahren zur Herstellung eines geträgerten Übergangsmetallkatalysators, welcher ein partikuläres organisches oder anorganisches Trägermaterial, einen Metallocenkomplex und eine metalloceniumionen-bildende Verbindung enthält, gefunden, welches dadurch gekennzeichnet ist, daß es die folgenden Verfahrensschritte umfaßt:
a) Kontaktierung einer Lösung einer metalloceniumionen-bildenden Verbindung mit einem zweiten Lösungsmittel, in welchem diese Verbindung no wenig löslich ist, daß der größte Teil dieses Verbindung durch das Lösungsmittel ausfällbar ist, in Gegenwart des Trägermaterials,
b) Entfernung zumindest eines Teils der Lösungsmittel vom Trägermaterial und
c) Kontaktierung einer Lösung eines Gemisches einer metalloceniumionen-bildenden Verbindung und eines Übergangsmetallkomplexes mit einem zweiten Lösungsmittel, in welchem dieses Gemisch so wenig löslich ist, daß der größte Teil dieses Gemisches durch das Lösungsmittel ausfällbar ist, in Gegenwart des nach a) und b) erhaltenen Trägermaterials.

Weiterhin wurde ein geträgerter Katalysator, der nach diesem Verfahren erhältlich ist, ein Verfahren zur Herstellung von Polymerisaten mittels dieses Katalysators sowie die Verwendung dieser Polymerisate zur Herstellung von Fasern, Folien und Formkörpern gefunden.

Als partikuläres organisches oder anorganisches Trägermaterial kommen beispielsweise Polyolefine wie Polyethylen, Polypropylen, Poly-1-buten und Polymethyl-1-penten und Copolymere mit den diesen Polymeren zugrundeliegenden Monomeren, weiterhin Polyester, Polyamide, Polyvinylchlorid, Polyacrylate und -methacrylate und Polystyrol in Betracht. Bevorzugt sind jedoch anorganische Trägermaterialien wie poröse Oxide, z.B. SiO₂, Al₂O₃, MgO, ZrO₂, TiO₂, B₂O₃, CaO, ZnO. Auch Metallhalogenide wie MgCl₂ kommen als Träger in Betracht. Die Trägermaterialien weisen vorzugsweise einen Teilchendurchmesser zwischen 1 und 300 µm auf, insbesondere von 30 bis 70 µm. Besonders bevorzugte Träger sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Besonders bevorzugte Kieselgele sind solche, die Hohlräume und Kanäle aufweisen, deren makroskopischer Volumenanteil am Gesamtpartikel im Bereich von 5 bis 30 % liegt. Bevorzugt werden solche Kieselgelträger eingesetzt, die einen mittleren Teilchendurchmesser von 5 bis 200 µm, insbesondere 20 bis 90 µm, und einen mittleren Teilchendurchmesser der Primärpartikel von 1 bis 20 µm, insbesondere 1 bis 10 µm, aufweisen. Bei den sogenannten Primärpartikeln handelt es sich dabei um poröse, granuläre Partikel. Die Primärpartikel weisen Poren mit einem Durchmesser von insbesondere 1 bis 1000 Angström auf. Weiterhin sind die zu verwendenden anorganischen Oxide u.a. auch noch dadurch charakterisiert, daß sie über Hohlräume und Kanäle mit einem Durchmesser von 1 bis 20 µm, verfügen. Diese Kieselgele weisen ferner insbesondere noch ein Porenvolumen von 0,1 bis 10 cm³/g, bevorzugt von 1,0 bis 5,0 cm³/g, ung eine spezifische Oberfläche von 10-bis 1000 m²/g auf. Derartige Produkte sind im Handel erhältlich, z.B. Sylopol 2101 (Fa. Grace), ES 70X (Fa. Crosfield) oder MS 3040 (Fa. PQ Corporation). Weitere Einzelheiten zu⁻ solchen Kieselgelen sind in der älteren deutschen Patentanmeldung 19 623 225.2 beschrieben.

Besonders geeignete Übergangsmetallkomplexe zum Einsatz in dem erfindungsgemäßen Verfahren sind Metallocenkomplexe von Elementen der 4. und 5. Nebengruppe des Periodensystems. Besonders geeignete Übergangsmetallkomplexe sind weiterhin solche, die Benzindenylliganden enthalten. Diese Benzindenylliganden können substituiert oder unsubstituiert sein.

Als Metallocenkomplexe eignen sich besonders solche der allgemeinen Formel III 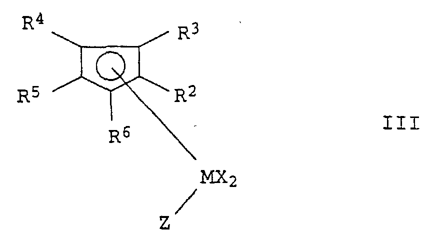 in der die Substituenten folgende Bedeutung haben:
- M: Titan, Zirkonium, Hafnium, Vanadium, Niob oder Tantal
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁷ oder -NR⁷R⁸,
wobei
- R⁷ und R⁸: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R² bis R⁶: Wasserstoff, C₁- bis C₁₀-Alkyl,
5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si (R⁹)₃ mit
- R⁹: C₁- bis C₁₀-Alkyl, C₃- bis C₁₀-Cycloalkyl oder C₆- bis C₁₅-Aryl,
- Z: für X oder 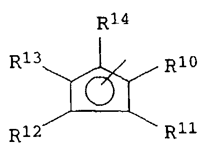 steht,
wobei die Reste
- R¹⁰ bis R¹⁴: Wasserstoff, C₁- bis C₁₀-Alkyl,
5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁵)₃ mit
- R¹⁵: C₁- bis C₁₀-Alkyl, C₆- bis C₁₅-Aryl oder C₃- bis C₁₀-Cycloalkyl,
oder wobei die Reste R⁵ und Z gemeinsam eine Gruppierung -R¹⁶-A-bilden, in der
- R¹⁶: 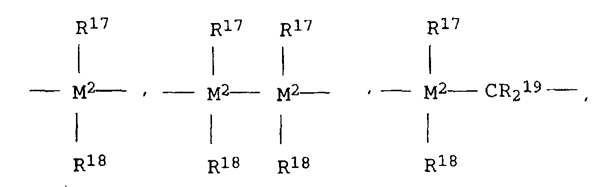 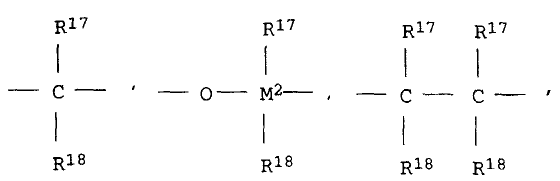 = BR¹⁷, = AlR¹⁷, -Ge-, -Sn-, -O-, -S-, = SO, = SO₂, = NR¹⁷, = CO, PR¹⁷ oder = P (O) R¹⁷ ist,
wobei
- R¹⁷, R¹⁸ und R¹⁹: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe be deuten oder wobei zwei benachbarte Reste jeweils mit den sie verbindenden Atomen einen Ring bilden, und
- M²: Silicium, Germanium oder Zinn ist,
- A: ―O―, ―S―, 〉NR²⁰ oder 〉PR²⁰ bedeuten, mit
- R²⁰: C₁- bis C₁₀-Alkyl, C₆- bis C₁₅-Aryl, C₃- bis C₁₀-Cycloalkyl, Alkylaryl oder Si(R²¹)₃,
- R²¹: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁵ und R¹³ gemeinsam eine Gruppierung -R¹⁶-bilden.

Von den Metallocenkomplexen der allgemeinen Formel III sind 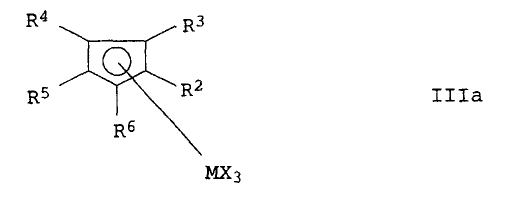 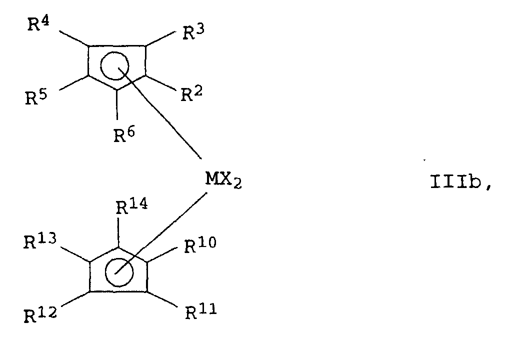 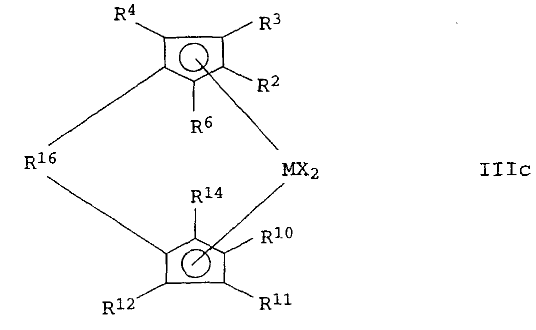 und 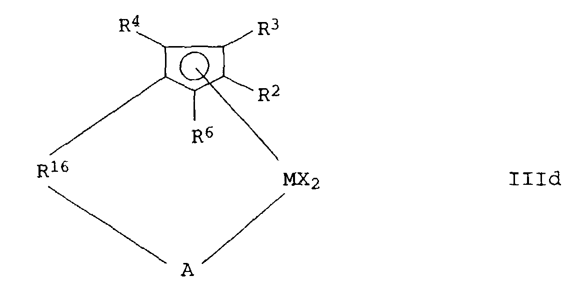 bevorzugt.

Besonders bevorzugt sind solche Übergangsmetallkomplexe, welche zwei miteinander verbrückte aromatische Ringsysteme als Liganden enthalten, also besonders die Übergangsmetallkomplexe der allgemeinen Formeln IIIb und IIIc.

Die Reste X können gleich oder verschieden sein, bevorzugt sind sie gleich.

Von den Verbindungen der Formel IIIa sind insbesondere diejenigen bevorzugt, in denen
- M: Titan, Zirkonium oder Hafnium,
- X: Chlor, C₁-bis C₄-Alkyl oder Phenyl und
- R² bis R⁶: Wasserstoff oder C₁- bis C₄-Alkyl bedeuten.

Von den Verbindungen der Formel IIIb sind als bevorzugt diejenigen zu nennen, bei denen
- M: für Titan, Zirkonium oder Hafnium steht,
- X: für Chlor, C₁-bis C₄-Alkyl oder Phenyl,
- R² bis R⁶: Wasserstoff, C₁- bis C₄-Alkyl oder Si(R⁹)₃,
- R¹⁰ bis R¹⁴: Wasserstoff, C₁- bis C₄-Alkyl oder Si (R¹⁵)₃ bedeuten.

Insbesondere sind die Verbindungen der Formel IIIb geeignet, in denen die Cyclopentadienylreste gleich sind.

Beispiele für besonders geeignete Verbindungen sind u.a.:
Bis(cyclopentadienyl) zirkoniumdichlorid,
Bis (pentamethylcyclopentadienyl)-zirkoniumdichlorid,
Bis(methylcyclopentadienyl) -zirkoniumdichlorid,
Bis (ethylcyclopentadienyl) -zirkoniumdichlorid,
Bis (n-butylcyclopentadienyl)-zirkoniumdichlorid und
Bis (trimethylsilylcyclopentadienyl)-zirkoniumdichlorid
sowie die entsprechenden Dimethylzirkoniumverbindungen.

Von den Verbindungen der Formel IIIc sind diejenigen besonders geeignet, in denen
- R² und R¹⁰: gleich sind und für Wasserstoff oder C₁- bis C₁₀-Alkylgruppen stehen,
- R⁶ und R¹⁴: gleich sind und für Wasserstoff, eine Methyl-, Ethyl-, iso-Propyl- oder tert.-Butylgruppe stehen
- R³, R⁴, R¹¹ und R¹² die Bedeutung: R⁴ und R¹² C₁- bis C₄-Alkyl
R³ und R¹¹ Wasserstoff haben oder zwei benachbarte Reste R³ und R⁴ sowie R¹¹ und R¹² gemeinsam für 4 bis 12 C-Atome aufweisende cyclische Gruppen stehen,
- R¹⁶: für 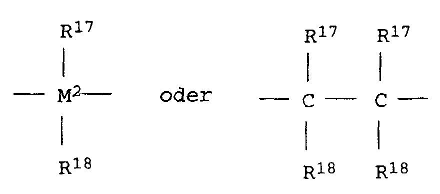 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a. Dimethylsilandiylbis (cyclopentadienyl) -zirkoniumdichlorid, Dimethylsilandiylbis (indenyl) -zirkoniumdichlorid, Dimethylsilandiylbis (tetrahydroindenyl)-zirkoniumdichlorid, Ethylenbis (cyclopentadienyl) -zirkoniumdichlorid, Ethylenbis (indenyl) -zirkoniumdichlorid, Ethylenbis (tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)zirkoniumdichlorid, Dimethylsilandiylbis(-3-tert.butyl-5-ethylcyclopentadienyl)zirkoniumdichlorid, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid Diethylsilandiylbis(-2-methylindenyl)-zirkoniumdibromid, Dimethylsilandiylbis(-3-methyl-5-methylcyclopentadienyl)zirkoniumdichlorid, Dimethylsilandiylbis (-3-ethyl-5-isopropylcyclopentadienyl)zirkoniumdichlorid, Dimethylsilandiylbis (-2-methylbenzindenyl) -zirkoniumdichlorid Dimethylsilandiylbis (2-ethylbenzindenyl) zirkoniumdichlorid, Methylphenylsilandiylbis (2-ethylbenzindenyl) zirkoniumdichlorid, Methylphenylsilandiylbis (2-methylbenzindenyl) zirkoniumdichlorid, Diphenylsilandiylbis (2-methylbenzindenyl) zirkoniumdichlorid, Diphenylsilandiylbis (2-ethylbenzindenyl) zirkoniumdichlorid, und Dimethylsilandiylbis (-2-methylindenyl) -hafniumdichlorid sowie die entsprechenden Dimethylzirkoniumverbindungen.

Bei den Verbindungen der allgemeinen Formel IIId sind als besonders geeignet diejenigen zu nennen, in denen
- M: für Titan oder Zirkonium,
- X: für Chlor, C₁-bis C₄-Alkyl oder Phenyl stehen.
- R¹⁶: für 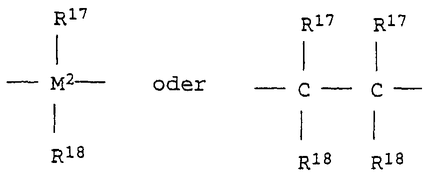 steht,
- A: für ―O― , ―S―, 〉NR²⁰
und
- R² bis R⁴ und R⁶: für Wasserstoff, C₁- bis C₁₀-Alkyl, C₃- bis C₁₀-Cycloalkyl, C₆- bis C₁₅-Aryl oder Si(R⁹)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als weitere Komponente enthält der nach dem erfindungsgemäßen Verfahren hergestellte Katalysator eine metalloceniumionen-bildende Verbindung.

Geeignete metalloceniumionen-bildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M³X¹X²X³ IV

bevorzugt, in der
- M³: ein Element der III. Hauptgruppe des Periodensystems bedeutet, insbesondere B, Al oder Ga, vorzugsweise B,
- X¹, X² und X³: für Wasserstoff, C₁- bis C₁₀ - Alkyl, C₆ - bis C₁₅ - Aryl, Alkylaryl, Arylalkyl, Halogenalkyl oder Halogenaryl mit jeweils 1 bis 10 C-Atomen im Alkylrest und 6 bis 20 C-Atomen im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+}) Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atomen im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis (pentafluorophenyl)borat.

Ionische Verbindungen mit Brönsted-Säuren als Kationen und vorzugsweise ebenfalls nicht koordinierenden Gegenionen sind in der WO 91/09882 genannt, bevorzugtes Kation ist das N,N-Dimethylanilinium.

Besonders geeignet als metalloceniumionen-bildende Verbindung sind offenkettige oder cyclische Alumoxanverbindungen der allgemeinen Formel I oder II 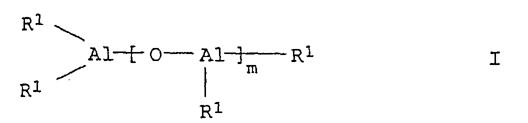 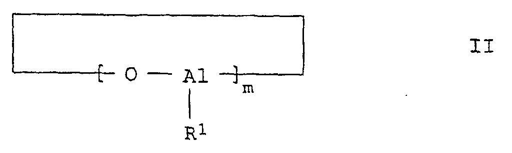
- wobei R¹: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können als metalloceniumionen-bildende Verbindungen Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Der erste Verfahrensschritt a) zur erfindungsgemäßen Herstellung der geträgerten Übergangsmetallkatalysatoren besteht in der Kontaktierung einer Lösung einer metalloceniumionen-bildenden Verbindung mit einem zweiten Lösungsmittel, in welchem diese Verbindung so wenig löslich ist, daß der größte Teil dieser Verbindung durch das Lösungsmittel ausfällbar ist, in Gegenwart des Trägermaterials. Dazu wird die metalloceniumionen-bildende Verbindung zunächst in einem ersten Lösungsmittel gelöst, in welchem sie gut löslich ist. Für viele metalloceniumionen-bildende Verbindungen, insbesondere für die Alumoxanverbindungen der Formel I und II kommen als Lösungsmittel beispielsweise aromatische Lösungsmittel wie Benzol, Toluol, Ethylbenzol, Xylol oder Chlorbenzol sowie chlorierte Kohlenwasserstoffe wie Dichlorethan oder Methylenchlorid in Betracht.

Als zweites Lösungsmittel, in welchem die metalloceniumionen-bildende Verbindung nur wenig löslich ist, kommen vor allem lineare oder verzweigte aliphatische Kohlenwasserstoffe wie Pentan, Hexan, Heptan, Octan, Decan, Dodecan, insbesondere Isododecan, ir Betracht. Auch technische Gemische verschiedener solcher Kohlenwasserstoffe wie Kerosin und das genannte Isododecan können verwendet werden. Weiterhin sind als zweites Lösungsmittel cycloaliphatische Lösungsmittel wie Cyclohexan und Norbornan zu nennen. Wenig löslich soll in diesem Zusammenhang bedeuten, daß bei den gegebenen Konzentrationen der metalloceniumionen-bildenden Verbindung der größte Teil dieser Verbindung durch das Lösungsmittel ausfällbar ist.

Zur Kontaktierung sind hier verschiedene Varianten möglich. So kann beispielsweise die Lösung der metalloceniumionen-bildenden Verbindung vorgelegt werden und mit einer Suspension des Trägermaterials im zweiten Lösungsmittel versetzt werden oder umgekehrt. Auch kann eine Suspension des Trägermaterials im ersten Lösungsmittel oder in einer Lösung der metalloceniumionen-bildenden Verbindung vorgelegt werden und mit dem zweiten Lösungsmittel versetzt werden. Als besonders bevorzugt hat sich die Variante erwiesen, das Trägermaterial im zweiten Lösungsmittel zu suspendieren und zu dieser Suspension langsam die Lösung der metalloceniumionen-bildenden Verbindung zuzugeben, wobei die Suspension ständig gerührt werden sollte.

Für Verfahrensschritt a) ist es vorteilhaft, folgende Gewichtsverhältnisse einzuhalten:

Das Verhältnis von metalloceniumionen-bildender Verbindung zum Trägermaterial soll möglichst groß gewählt werden, um eine möglichst große Belegung des Trägers zu erreichen. Es beträgt vorzugsweise 1:1 bis 0,05:1, besonders bevorzugt 0,8:1 bis 0,3:1.

Das Verhältnis von metalloceniumionen-bildender Verbindung zum ersten Lösungsmittel sollte möglichst so groß sein, wie es die Löslichkeit zuläßt, im allgemeinen also 0,5:1 bis 0,01:1, besonders bevorzugt 0,3:1 bis 0,1:1.

Das Verhältnis vom ersten Lösungsmittel zum zweiten Lösungsmittel sollte möglichst gering sein, um eine möglichst wirksame Ausfällung der metalloceniumionen-bildenden Verbindung auf den Träger zu erreichen. Bevorzugt ist ein Gewichtsverhältnis von 1:1 bis 0,05:1, besonders bevorzugt von 0,5:1 bis 0,1:1.

Im nachfolgenden Verfahrensschritt b) wird zumindest ein Teil der Lösungsmittel vom gemäß a) modifizierten Trägermaterial entfernt. Dies kann beispielsweise durch Destillation, vorzugsweise durch fraktionierte Destillation erfolgen. Für den Fall einer Entfernung von Lösungsmittel durch Destillation empfiehlt es sich, das Lösungsmittelpaar so zu wählen, daß das erste Lösungsmittel einen niedrigeren Siedepunkt, bevorzugt einen um mehr als 20°C niedrigeren Siedepunkt aufweist als das zweite Lösungsmittel. Auf diese Weise kann der größte Teil des ersten Lösungsmittels aus der Suspension entfernt werden und dadurch eine effektivere Ausfällung der Katalysatorkomponenten im Schritt c) erreicht werden.

Als noch günstiger als die destillative Entfernung des Lösungsmittels hat sich eine mechanische Trennung der Suspension, beispielsweise durch Filtration, erwiesen. Auf diese Weise können auch nicht flüchtige ungebundene Bestandteile der Lösung der metalloceniumionen-bildenden Verbindung vom Trägermaterial entfernt werden. Besonders eine Ausführungsform des erfindungsgemäßen Verfahrens, bei dem das Trägermaterial abfiltriert wird und dann erst mit dem ersten Lösungsmittel oder einem anderen Lösungsmittel, in welchem die metalloceniumionen-bildende Verbindung gut löslich ist, und anschließend mit dem zweiten Lösungsmittel gewaschen wird, hat sich als vorteilhaft erwiesen, da auf diese Weise Katalysatoren besonders hoher Produktivität hergestellt werden können.

Zu diesem Waschschritt werden vorzugsweise 5 bis 40 Volumenteile des jeweiligen Lösungsmittels, besonders bevorzugt 10 bis 20 Volumenteile eingesetzt, jeweils bezogen auf das Volumen des Trägermaterials. Auch mehrmaliges Waschen mit den entsprechenden Lösungsmitteln hat sich als vorteilhaft erwiesen.

Der Schritt c) des erfindungsgemäßen Verfahrens beinhaltet die Beladung des Trägers mit dem eigentlichen Katalysatorkomplex. Für Schritt c) kommen sinngemäß die gleichen Varianten in Betracht, wie sie für Schritt a) genannt wurden. Auch hier hat es sich als vorteilhaft erwiesen, eine Suspension des Trägermaterials im zweiten Lösungsmittel vorzulegen und zu dieser Suspension langsam die Lösung eines Gemisches aus der metalloceniumionen-bildenden Verbindung und des Übergangsmetallkomplexes im ersten Lösungsmittel zuzugeben, vorzugsweise unter ständigem Rühren.

Nach der Zugabe der Lösung des Gemisches aus metalloceniumionen-bildender Verbindung und des Übergangsmetallkomplexes kann es von Vorteil sein, durch destillative Entfernung des ersten Lösungsmittels, welches in diesem Fall einen niedrigeren Siedepunkt als das zweite Lösungsmittel aufweisen muß, eine Vervollständigung der Ausfällung zu erreichen. Dies ist besonders dann der Fall, wenn aus Löslichkeitsgründen eine große Menge des ersten Lösungsmittels eingesetzt werden mußte.

Das Gemisch aus metalloceniumionen-bildender Verbindung und Übergangsmetallkomplex enthält diese beiden Komponenten vorzugsweise im Gewichtsverhältnis von 40:1 bis 3:1, besonders bevorzugt von 20:1 bis 5:1.

Die Lösung des Gemisches sollte möglichst hoch konzentriert sein. Vorzugsweise enthält diese Lösung 5 bis 50 Gew.-% des Gemisches, besonders bevorzugt 20 bis 30 Gew.-%.

Für die anderen Volumen- und Gewichtsanteile gelten die für den Verfahrensschritt a) genannten Verhältnisse.

Die Verfahrenstemperatur der Beladungsschritte hängt unter anderem von der Stabilität der metalloceniumionen-bildenden Verbindung und des Übergangsmetallkomplexes ab. Die Temperatur der Trägersuspension sollte vorzugsweise niedrig, die Temperatur der Lösung der Aktivkomponenten gemäß Verfahrensschritt a) und c) sollte eher höher sein, jedoch führt auch eine einheitliche Verfahrenstemperatur zu guten Ergebnissen. Im allgemeinen liegt die Verfahrenstemperatur zwischen -10 und +60°C, vorzugsweise zwischen +10 und +40°C, besonders bevorzugt zwischen 20 und 30°C.

Der Druck hat kaum Einfluß auf das Verfahrensergebnis, lediglich bei der Destillation gemäß Verfahrensschritt c) kann ein verminderter Druck vorteilhaft sein.

Das erfindungsgemäße mehrstufige Verfahren zur Herstellung eines geträgerten Übergangsmetallkatalysators führt zu Katalysatoren mit sehr homogen verteilten Aktivkomponenten und hohen Beladungen. Diese Vorteile beruhen auf der Kombination der Verfahrensschritte a), b) und c). Im Schritt a) wird eine intensive Beladung des Trägers mit der metalloceniumionen-bildenden Verbindung erreicht. Schritt b) entfernt Bestandteile, die auf den nachfolgenden Schritt c) störend wirken. Schritt c) bewirkt durch die Vorreaktion des Übergangsmetallkomplexes mit der metalloceniumionen-bildenden Verbindung die Bildung eines aktiven Katalysatorkomplexes und eine Erhöhung der Löslichkeit des Übergangsmetallkomplexes, wodurch eine höhere und homogenere Beladung des Trägers ermöglicht wird. Die Erhöhung der Löslichkeit kommt besonders bei schwerlöslichen Komplexen wie den Übergangsmetallkomplexen mit zwei miteinander verbrückten aromatischen Ringsystemen zum Tragen. Ohne die Vorbehandlung des Trägers gemäß Verfahrensschritt a) führt Verfahrensschritt c) jedoch zu unbefriedigenden Ergebnissen.

Erfindungsgemäß eignet sich der hier beschriebene geträgerte Übergangsmetallkatalysator besonders für Verfahren zur Herstellung von Polymerisaten von C₂-C₁₂-Alk-1-enen bei Temperaturen im Bereich von -50 bis 300°C und Drücken von 0,5 bis 3000 bar.

Von den bei dem erfindungsgemäßen Verfahren zur Herstellung von Polymerisaten eingesetzten C₂- bis C₁₂-Alk-1-enen sind Ethylen, Propen, But-1-en, Pent-1-en, 4-Methyl-pent-1-en, Hex-1-en, Hept-1-en oder Oct-1-en, sowie Gemische aus diesen C₂- bis C₁₂-Alk-1-enen bevorzugt. Besonders bevorzugt sind Homo- oder Copolymerisate des Propens, wobei der Anteil an Propen in den Copolymerisaten mindestens 50 mol-% beträgt. Bei den Copolymerisaten des Propens sind diejenigen bevorzugt, die als weitere Monomere Ethylen oder But-1-en oder deren Mischungen enthalten.

Das erfindungsgemäße Verfahren zur Herstellung von Polymerisaten wird bei Temperaturen im Bereich von -50 bis 300°C, vorzugsweise im Bereich von 0 bis 150°C und bei Drücken im Bereich von 0,5 bis 3000 bar, vorzugsweise im Bereich von 1 bis 80 bar durchgeführt.

Die Polymerisation kann in Lösung, in Suspension, in flüssigen Monomeren oder in der Gasphase durchgeführt werden. Bevorzugt erfolgt die Polymerisation in flüssigen Monomeren oder in der Gasphase, wobei die gerührte Gasphase bevorzugt ist.

Das Verfahren kann kontinuierlich oder diskontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann (Reaktorkaskade).

Das erfindungsgemäße Polymerisationsverfahren zeichnet sich durch gute Durchführbarkeit im technischen Maßstab, gute Polymermorphologie, gleichmäßige Polymerkettenlängen, keine Belagbildung, keine Agglomeratbildung und gute Produktivität aus.

Eine bevorzugte Ausführungsform des erfindungsgemäßen Polymerisationsverfahrens besteht in der Polymerisation in Gegenwart von Wasserstoff als Molmassenregler. Das erfindungsgemäße Katalysatorsystem reagiert schon auf geringe Mengen Wasserstoff mit einer ausgeprägten Produktivitätssteigerung. Vorzugsweise beträgt der Anteil des Wasserstoffs z.B. bei einer Gasphasenpolymerisation 0,01 bis 1,2 Vol-%, besonders bevorzugt 0,05 bis 0,9 Vol-%, bezogen auf das Gesamtvolumen des Polymerisationsgasgemisches.

Die nach dem erfindungsgemäßen Polymerisationsverfahren erhaltenen Polymerisate eignen sich beispielsweise gut zur Herstellung von Fasern, Folien und Formkörpern.

### Beispiele

### Beispiel 1

1.1 Herstellung des Katalysators
   20 g Kieselgel SG 332 (Hersteller Grace, Worms) wurden im Vakuum 8 h bei 180°C partiell dehydratisiert, in 170 ml Pentan suspendiert, und anschließend wurde innerhalb von 4 h 160 ml 1.53 M Methylalumoxan (MAO) in Toluol (Hersteller Witco, Bergkamen) bei 25°C langsam zugetropft. Nach 12 h bei 25°C wurde die überstehende farblose Lösung abdekantiert und der MAO-beladene Träger mit 2 x 50 ml Toluol und anschließend mit 2 x 50 ml Pentan gewaschen. Das MAO-beladene Kieselgel wurde in 150 ml Pentan resuspendiert und innerhalb von 4 Stunden mit einer Lösung von 115 mg rac-Bis-[3,3'-(2-Methylbenzo [e] indenyl)] dimethylsilandiylzirkoniumdichlorid in 30,6 ml 1,53 M MAO (Toluollösung) versetzt. Nach 1 h wurde der geträgerte Katalysator durch Filtration isoliert, mit 2 x 50 ml Pentan gewaschen und im N₂-Strom bei 25°C getrocknet.
   Ausbeute: 29 g
1.2 Polymerisation
   In einen trockenen mit Stickstoff gespülten 10 l Autoklaven wurden nacheinander 50 g Polypropylengries und 10 ml Triisobutylaluminium (2 M in Heptan) gegeben und 15 min gerührt. Anschließend wurden 510 mg geträgerter Katalysator im Stickstoffgegenstrom in den Reaktor gefüllt, dieser wurde verschlossen und bei einer Rührerdrehzahl von 350 U/min bei 25°C mit 1,5 l flüssigem Propylen befüllt. Nach 30 min Vorpolymerisation wurde schrittweise die Temperatur auf 65°C erhöht, wobei der Innendruck stufenweise durch automatische Druckregelung bis zum Enddruck von 25 bar erhöht wurde. Anschließend wurden 60 min bei automatischer Propylengasdruckregelung (25 bar) in der Gasphase bei 65°C polymerisiert. Nach beendeter Polymerisation wurde 10 min lang auf Atmosphärendruck entspannt und das entstandene Polymerisat im Stickstoffstrom ausgetragen. Man erhält 815 g Polypropylengrieß, was einer Produktivität von 1500 g PP/g Katalysator h entspricht. Die zugehörigen Katalysator- und Polymerdaten sind in Tabelle 1 und 2 aufgelistet.

### Beispiel 2

Die Präparation des Katalysators erfolgte analog zu Beispiel 1. Hierbei wurde die MAO-Beladung des partiell dehydratisierten Kieselgels in der oben beschriebenen Weise durchgeführt. Bei der Metallocenbeladung wurden 288 mg rac-Bis- [3,3' - (2-Methylbenzo [e] indenyl)]dimethylsilandiylzirkoniumdichlorid in 65 ml 1,53 M MAO (Toluollösung) verwendet. Die Ausbeute betrug 30,1 g.

413 mg geträgerter Katalysator lieferten bei der Polymerisation von Propylen (entsprechend der Polymerisation von Beispiel 1) 1065 g Polymergrieß, was einer Produktivität von 2450 g PP/g Katalysator h entspricht. Die zugehörigen Katalysator- und Polymerdaten sind in Tabelle 1 und 2 aufgelistet.

### Beispiel 3

Die Präparation des Katalysators erfolgte analog zu Beispiel 1. Hierbei wurde die MAO-Beladung des partiell dehydratisierten Kieselgels in der oben beschriebenen Weise durchgeführt. Bei der Metallocenbeladung wurden 576 mg rac-Bis-[3,3'-(2-Methylbenzo[e]indenyl)]dimethylsilandiylzirkoniumdichlorid in 130 ml 1,53 M MAO (Toluollösung) verwendet. Die Ausbeute betrug 32,4 g. 305 mg geträgerter Katalysator lieferten bei der Polymerisation von Propylen (entsprechend der Polymerisation von Beispiel 1) 1180 g Polymergrieß, was einer Produktivität von 3700. g PP/g Katalysator h entspricht. Die zugehörigen Katalysator- und Polymerdaten sind in Tabelle 1 und 2 aufgelistet.

### Beispiel 4

Die Präparation des Katalysators erfolgte analog zu Beispiel 1. Hierbei wurde die MAO-Beladung des partiell dehydratisierten Kieselgels in der oben beschriebenen Weise durchgeführt. Bei der Metallocenbeladung wurden 1152 mg rac-Bis- [3,3' - (2-Methylbenzo [e] indenyl)]dimethylsilandiylzirkoniumdichlorid in 260 ml 1,53 M MAO (Toluollösung) verwendet. Die Ausbeute betrug 32,9 g.

227 mg geträgerter Katalysator lieferten bei der Polymerisation von Propylen (entsprechend der Polymerisation von Beispiel 1) 1180 g Polymergrieß, was einer Produktivität von 4950 g PP/g Katalysator h entspricht. Die zugehörigen Katalysator- und Polymerdaten sind in Tabelle 1 und 2 aufgelistet.

### Beispiel 5

Die Präparation des Katalysators erfolgte analog zu Beispiel 1. Hierbei wurde die MAO-Beladung des partiell dehydratisierten Kieselgels in der oben beschriebenen Weise durchgeführt. Bei der Metallocenbeladung wurden 2304 mg rac-Bis- [3,3'-(2-Methylbenzo [e] indenyl)] dimethylsilandiylzirkoniumdichlorid in 520 ml 1,53 M MAO (Toluollösung) verwendet. Die Ausbeute betrug 33,4 g.

108 mg geträgerter Katalysator lieferten bei der Polymerisation von Propylen (entsprechend der Polymerisation von Beispiel 1) 695 g Polymergrieß, was einer Produktivität von 4950 g PP/g Katalysator h entspricht. Die zugehörigen Katalysator- und Polymerdaten sind in Tabelle 1 und 2 aufgelistet.

### Beispiel 6

6.1 Herstellung des Katalysators
   20 g Kieselgel SG 332 wurden im Vakuum 8 h bei 180°C partiell dehydratisiert, in 200 ml iso-Dodekan suspendiert und anschließend innerhalb von 4 h 160 ml .1.53 M MAO (Toluollösung) bei 0°C langsam zugetropft. Nach 12 h bei 0°C wurde die überstehende farblose Lösung abfiltriert und der MAO-beladene Träger mit 2 x 50 ml Toluol und anschließend mit 2 x 50 ml Pentan gewaschen. Trocknen im N₂-Strom bei 25°C ergab 28,2 g MAO-beladenes Kieselgel.
   5,0 g des so hergestellten MAO-beladenen Kieselgels wurden in 200 ml iso-Dodekan suspendiert und innerhalb von 4 h bei 0°C mit einer Lösung von 288 mg Bis-[3,3'-(2-Methylbenzo [e] indenyl)]dimethylsilandiylzirkoniumdichlorid in 65 ml 1,53 M MAO (Toluollösung) versetzt. Nach 1 h wurde der geträgerte Katalysator durch Filtration isoliert, mit 2 x 25 ml Pentan gewaschen und im N₂-Strom bei 25°C getrocknet. Die Ausbeute betrug 5,6 g.
6.2 Polymerisation
   Die Polymerisation wurde analog zu Bsp. 1.2 durchgeführt. 198 mg geträgerter Katalysator lieferten bei der Polymerisation von Propylen 1050 g Polymergrieß, was einer Produktivität von 5050 g PP/g Katalysator h entspricht. Die zugehörigen Polymerdaten sind in Tabelle 3 aufgelistet.
7.1 Herstellung des Katalysators
   160 ml 1,53 M MAO (Toluollösung) wurde bei 25°C im Hochvakuum bis auf 60 ml eingeengt (100 ml abdestilliert). Die eingeengte MAO-Toluol-Lösung wurde innerhalb von 4 h bei 0°C langsam zu einer Suspension von 20 g Kieselgel SG 332 (im Vakuum 8 h bei 180°C partiell dehydratisiert) und 200 ml iso-Dodekan zugetropft. Nach 12 h bei 0°C wurde die überstehende farblose Lösung abfiltriert und der MAO-beladene Träger mit 2 x 50 ml Toluol und anschließend mit 2 x 50 ml Pentan gewaschen. Trocknen im N₂-Strom bei 25°C ergab 33,8 g MAO-beladenes Kieselgel.
   Eine Lösung von 288 mg rac-Bis- [3,3'-(2-Methylbenzo [e] indenyl)]dimethylsilandiylzirkoniumdichlorid in 65 ml 1,53 M MAO-Toluol-Lösung wurde bei 25°C im Hochvakuum bis auf 30 ml Volumen reduziert. Anschließend wurde die eingeengte MAO-Metallocen-Lösung innerhalb von 4h bei 25°C langsam zu einer Suspension von 5,0 g des oben hergestellten MAO-beladenen Kieselgels in 200 ml iso-Dodekan zugetropft. Nach 1 h wurde der geträgerte Katalysator durch Filtration isoliert, mit 2 x 25 ml Pentan gewaschen und im N₂-Strom bei 25°C getrocknet. Die Ausbeute betrug 6,1 g.
7.2 Polymerisation
   Die Polymerisation wurde analog zu Bsp. 1.2 durchgeführt. 142 mg geträgerter Katalysator lieferten bei der Polymerisation von Propylen 860 g Polymergrieß, was einer Produktivität von 5700 g PP/g Katalysator h entspricht. Die zugehörigen Polymerdaten sind in Tabelle 3 aufgelistet.

### Beispiel 8

5 g Kieselgel SG 332 wurden im Vakuum 8 h bei 180°C partiell dehydratisiert, in 50 ml iso-Dodekan suspendiert und anschließend innerhalb von 4 h 160 ml 1.53 M MAO in Toluollangsam zugetropft. Nach 12 h bei 25°C wurde die überstehende farblose Lösung abdekantiert und der MAO-beladene Träger mit 2 x 10 ml Toluol gewaschen. Anschließend wurde das MAO-beladene Kieselgel in 100 ml iso-Dodekan resuspendiert und mit der Hälfte von einer Lösung von 288 mg rac-Bis-[3,3'-(2-Methyl-benzo [e] indenyl)]dimethylsilandiylzirkoniumdichlorid in 65 ml 1,53 M MAO (Toluollösung) unter Rühren bei 25°C innerhalb von 2 h versetzt. Nach 0,5 h wurde das Lösungsmittel mittels Filtration entfernt und der Feststoff erneut in 100 ml iso-Dodekan aufgenommen. Anschließend wurde der noch verbliebene Rest der rac-Bis-[3,3'-(2-Methylbenzo [e] indenyl)]dimethylsilandiylzirkoniumdichlorid - MAO - Lösung innerhalb von weiteren 2 h zugetropft. Nach erfolgter Zugabe wurde die Suspension bei 25°C weitere 0,5 h gerührt und dann der Feststoff filtriert. Waschen mit 2 x 20 ml Pentan ergab 8,5 g Katalysator.

Die Polymerisation wurde analog zu Bsp. 1.2 durchgeführt. 213 mg geträgerter Katalysator lieferten bei der Polymerisation von Propylen 1120 g Polymergrieß, was einer Produktivität von 5000 g PP/g Katalysator h entspricht. Die zugehörigen Polymerdaten sind in Tabelle 3 aufgelistet.

### Beispiel 9

5 g Kieselgel SG 332 wurden im Vakuum 8 h bei 180°C partiell dehydratisiert, in 50 ml Pentan suspendiert, und anschließend wurde innerhalb von 1 h ein Viertel von 160 ml 1.53 M MAO (Toluollösung) bei 25°C langsam zugetropft. Nach 3 h wurde der Feststoff filtriert und in 50 ml Pentan resuspendiert. Anschließend wurde das zweite Viertel der oben verwendeten MAO-Lösung zugetropft (1 h Zugabe, 3 h Nachrühren). Nach erneuter Filtration und Resuspension des Feststoffs in 50 ml Pentan wurde die MAO-Beladung mit weiteren 40 ml MAO-Lösung fortgesetzt (1 h Zugabe, 3 h Nachrühren). Die letzten 40 ml MAO-LÖsung wurden wieder nach Filtration und Resuspension des Feststoffs in 50 ml Pentan bei 25°C langsam zugegeben (1 h). Nach 12 h bei 25°C wurde die überstehende farblose Lösung abfiltriert und der MAO-beladene Träger mit 2 x 10 ml Toluol gewaschen. Anschließend wurde das MAO-beladene Kieselgel in 100 ml iso-Dodekan resuspendiert und mit der Hälfte von einer Lösung von 288 mg rac-Bis-[3,3'-(2-Methylbenzo [e] indenyl)] dimethylsilandiylzirkoniumdichlorid in 65 ml 1,53 M MAO (Toluollösung) unter Rühren bei 25°C innerhalb von 2 h versetzt. Nach 0,5 h wurde das komplette Lösungsmittel mittels Filtration entfernt und der Feststoff erneut in 100 ml iso-Dodekan aufgenommen. Anschließend wurde der noch verbliebene Rest der rac-Bis- [3,3' - (2-Methyl-benzo[e]indenyl)]dimethylsilandiylzirkoniumdichlorid - MAO - Lösung innerhalb von weiteren 2 h zugetropft. Nach erfolgter Zugabe wurde die Suspension bei 25°C weitere 0,5 h gerührt und dann der Feststoff filtriert. Waschen mit 2 x 20 ml Pentan ergab 8,9 g Katalysator.

Die Polymerisation wurde analog zu Bsp. 1.2 durchgeführt. 197 mg geträgerter Katalysator lieferten bei der Polymerisation von Propylen 1095 g Polymergrieß, was einer Produktivität von 5300 g PP/g Katalysator h entspricht. Die zugehörigen Polymerdaten sind in Tabelle 3 aufgelistet.

### Beispiel 10

10.1 Herstellung des Katalysators
   20 g Kieselgel SG 332 wurden im Vakuum 8 h bei 180°C partiell dehydratisiert, in 200 ml iso-Dekan suspendiert und anschließend innerhalb von 4 h 160 ml 1.53 M MAO (Toluollösung) bei 25°C langsam zugetropft. Nach 12 h bei 25°C wurde die überstehende farblose Lösung abfiltriert und der MAO-beladene Träger mit 2 x 10 ml Toluol und anschließend 2 x 50 ml Pentan gewaschen. Trocknen im N₂-Strom bei 25°C ergab 28,1 g MAO-desaktiviertes Kieselgel. Eine Lösung von 576 mg rac-Bis-[3,3'-(2-Methyl-benzo [e] indenyl)]dimethylsilandiylzirkoniumdichlorid in 130 ml 1,53 M MAO-Toluol-Lösung wurde bei 25°C im Hochvakuum bis auf 50 ml Volumen reduziert. Anschließend wurde die eingeengte MAO-Metallocen-Lösung innerhalb von 4 h bei 25°C langsam zu einer Suspension von 5,0 g des wie oben beschrieben hergestellten MAO-beladenen Kieselgels in 250 ml iso-Dekan zugetropft. Nach 1 h wurde der geträgerte Katalysator durch Filtration isoliert, mit 2 x 20 ml Pentan gewaschen und im N₂-Strom bei 25°C getrocknet. Die Ausbeute betrug 6,4 g.
10.2 Polymerisation
   Die Polymerisation wurde analog zu Bsp. 1.2 durchgeführt. 98 mg geträgerter Katalysator lieferten bei der Polymerisation von Propylen 850 g Polymergrieß, was einer Produktivität von 8150 g PP/g Katalysator h entspricht. Die zugehörigen Polymerdaten sind in Tabelle 3 aufgelistet.

### Beispiel 11

11.1 Herstellung des Katalysators
   20 g Kieselgel SG 332 wurden im Vakuum 8 h bei 180°C partiell dehydratisiert und langsam zu 160 ml 1.53 M MAO (Toluollösung) gegeben, so daß die Temperatur nicht über 35°C anstieg. Anschließend wurden innerhalb von 4 h 200 ml n-Dekan zu der Kieselgel-MAO-Toluol Suspension getropft und noch 4 h bei 35°C nachgerührt. Anschließend wurde die überstehende farblose Lösung abfiltriert und der MAO-beladene Träger mit 2 x 50 ml Toluol und anschließend mit 2 x 50 ml Pentan gewaschen. Trocknen im N₂-Strom bei 25°C ergab 27,5 g MAO-beladenes Kieselgel. 5,0 g des so hergestellten MAO-beladenen Kieselgels wurden bei 35°C mit einer Lösung von 288 mg rac-Bis- [3,3' - (2-Methyl-benzo [e] indenyl)]dimethylsilandiylzirkoniumdichlorid in 65 ml 1,53 M MAO (Toluollösung) versetzt. Innerhalb von 4 h wurde 200 ml n-Dekan zugetropft und nach 1 h wurde der geträgerte Katalysator durch Filtration isoliert, mit 2 x 20 ml Pentan gewaschen und im N₂-Strom bei 25°C getrocknet. Die Ausbeute beträgt 5,5 g.
11.2 Polymerisation
   Die Polymerisation wurde analog zu Bsp. 1.2 durchgeführt. 204 mg geträgerter Katalysator lieferten bei der Polymerisation von Propylen 1095 g Polymergrieß, was einer Produktivität von 5100 g PP/g Katalysator h entspricht. Die zugehörigen Polymerdaten sind in Tabelle 3 aufgelistet.

### Beispiel 12

5,0 g MAO-beladenes Trägermaterial gemäß Bsp. 11.1 wurden bei 25°C in einer Lösung von 288 mg rac-Bis-[3,3'-(2-Methylbenzo [e] indenyl)] dimethylsilandiylzirkoniumdichlorid in 65 ml 1,53 M MAO-Toluol-Lösung (Witco, Toluollösung) suspendiert und nach erfolgter Zugabe tropfenweise mit 100 ml n-Dekan versetzt. Nach einer weiteren Stunde bei 25°C wurde im Hochvakuum bei 35°C das Toluol fraktioniert abdestilliert. Die verbleibende Suspension wurde filtriert, der Feststoff mit 2 x 20 ml Pentan gewaschen und im N₂-Strom getrocknet. Die Ausbeute betrug 5,8 g.

Die Polymerisation wurde analog zu Bsp. 1.2 durchgeführt. 395 mg geträgerter Katalysator lieferten bei der Polymerisation von Propylen 860 g Polymergrieß, was einer Produktivität von 2050 g PP/g Katalysator h entspricht. Die zugehörigen Polymerdaten sind in Tabelle 3 aufgelistet.

### Beispiel 13

Es wurde analog zu Beispiel 11 verfahren, jedoch wurde anstatt der MAO-Lösung eine Lösung von PMAO, 20 gew.-%ig in Toluol (Hersteller Akzo, Deventer, Niederlande) zur Trägerung des Katalysators eingesetzt. Hierbei wurde jeweils entsprechend weniger 20 % PMAO-Toluollösung eingesetzt, um die gleichen molaren Mengen einzusetzen. Die Ausbeute an geträgertem Katalysator betrug 5,6 g.

Die Polymerisation wurde analog zu Bsp. 1.2 durchgeführt. 207 mg geträgerter Katalysator lieferten bei der Polymerisation von Propylen 1140 g Polymergrieß, was einer Produktivität von 5250 g PP/g Katalysator h entspricht. Die zugehörigen Polymerdaten sind in Tabelle 3 aufgelistet.

### Beispiel 14

Es wurde analog zu Beispiel 12 verfahren, jedoch wurde der geträgerte Katalysator mit 20 gew.-%iger PMAO (Toluollösung) hergestellt. Hierbei wurde jeweils entsprechend weniger PMAO-Toluollösung eingesetzt, um die gleichen molaren Mengen einzusetzen. Die Ausbeute betrug 5,7 g.

Die Polymerisation wurde analog zu Bsp. 1.2 durchgeführt. 413 mg geträgerter Katalysator lieferten bei der Polymerisation von Propylen 920 g Polymergrieß, was einer Produktivität von 2100 g PP/g Katalysator h entspricht. Die zugehörigen Polymerdaten sind in Tabelle 3 aufgelistet.

### Beispiel 15

Es wurde analog zu Beispiel 13 verfahren, jedoch wurde das Trägermaterial und der geträgerte Katalysator mit einer 30 gew.-%igen MAO-Lösung in Toluol hergestellt. Hierbei wurde jeweils entsprechend weniger von dieser MAO-Toluollösung eingesetzt, um die gleichen MAO-Mengen einzusetzen. Die Ausbeute an geträgertem Katalysator betrug 5,5 g.

Die Polymerisation wurde analog zu Bsp. 1.2 durchgeführt. 413 mg geträgerter Katalysator lieferten bei der Polymerisation von Propylen 920 g Polymergrieß, was einer Produktivität von 2100 g PP/g Katalysator h entspricht. Die zugehörigen Polymerdaten sind in Tabelle 3 aufgelistet.

### Beispiel 16

Es wurde analog zu Beispiel 14 verfahren, jedoch wurde das Trägermaterial und der geträgerte Katalysator mit einer 30 gew.-%igen MAO-Toluollösung wie in Bsp. 15 hergestellt. Hierbei wurde jeweils entsprechend weniger 30 gew.-%ige MAO-Toluollösung eingesetzt, um die gleichen MAO-Mengen einzusetzen. Die Ausbeute an geträgertem Katalysator betrug 5,6 g.

Die Polymerisation wurde analog zu Bsp. 1.2 durchgeführt. 443 mg geträgerter Katalysator lieferten bei der Polymerisation von Propylen 920 g Polymergrieß, was einer Produktivität von 1900 g PP/g Katalysator h entspricht. Die zugehörigen Polymerdaten sind in Tabelle 3 aufgelistet.

### Beispiel 17

17.1 Herstellung des Katalysators
   20 g Aluminiumoxid (ICN Alumina A, Akt. I, ICN-Biomedicals, Eschwege) wurden in 200 ml n-Dekan suspendiert, und anschließend wurde innerhalb von 4 h 160 ml 1.53 M MAO (Witco, Toluollösung) bei 25°C langsam zugetropft. Nach 12 h bei 25°C wurde die überstehende farblose Lösung abfiltriert und der MAO-beladene Träger mit 2 x 50 ml Toluol und anschließend mit 2 x 50 ml Pentan gewaschen. Trocknen im-N₂-Strom bei 25°C ergab 28,9 g MAO-beladenes Aluminiumoxid. 5,0 g des so hergestellten MAO-beladenen "Aluminiumoxids wurden in einer Lösung von 145 mg rac-Bis- [3,3' - (2-Methyl-benzo [e] indenyl)] dimethylsilandiylzirkoniumdichlorid und 35 ml 1,53 M MAO (Toluollösung) suspendiert und innerhalb von 4 h in 5°C Schritten auf 0°C heruntergekühlt. Anschließend wurde bei 0°C 250 ml n-Dekan zugetropft. Nach 1 h wurde der geträgerte Katalysator durch Filtration isoliert, mit 2 x 20 ml Pentan gewaschen und im N₂-Strom bei 25°C getrocknet. Die Ausbeute betrug 5,5 g.
17.2 Polymerisation
   In einen trockenen mit Stickstoff gespülten 10 l Autoklaven wurden 50 g Polypropylengrieß vorgelegt. Anschließend wurden nacheinander 4 l flüssiges Propylen, 10 ml Triisobutylaluminium (2 M in Heptan) und 504 mg Katalysator über eine Schleuse in den Reaktor gegeben. Bei einer Rührerdrehzahl von 350 U/min wurde bei 25°C der Autoklav mit weiteren 3 l Propylen befüllt. Anschließend wurde schrittweise die Temperatur auf 65°C erhöht, wobei sich der Innendruck auf 26 bar einstellte. Es wurde 60 min bei 65°C polymerisiert und das Polymerisat im Stickstoffstrom ausgetragen. Man erhielt 910 g Polypropylen, was einer Produktivität von 1700 g PP/g Katalysator h entspricht. Die zugehörigen Polymerdaten sind in Tabelle 3 aufgelistet.

### Beispiel 18

Die Herstellung des MAO-beladenen Trägermaterials erfolgte analog zu Beispiel 6, jedoch wurde das MAO-beladenen Trägermaterial auf Basis von Aluminiumoxid (ICN Alumina A, Akt. I) und unter Substitution von iso-Dodekan durch n-Dekan hergestellt. 5,0 g so hergestelltes MAO-beladenes Trägermaterial wurde bei 25°C in einer Lösung von 145 mg rac-Bis-[3,3'-(2-Methyl-benzo [e] indenyl)]dimethylsilandiylzirkoniumdichlorid und 35 ml 1,53 M MAO (Toluollösung) suspendiert. Innerhalb von 4 h wurde bei 25°C 250 ml n-Dekan zugetropft. Nach 1 h wurde im Hochvakuum bei 25°C das enthaltene Toluol abdestilliert. Die verbleibende Suspension wurde filtriert, der Feststoff 2 x 50 ml Pentan gewaschen und im N₂-Strom getrocknet. Die Ausbeute betrug 5,8 g.

Die Polymerisation wurde analog zu Bsp. 17 durchgeführt. 751 mg geträgerter Katalysator lieferten bei der Polymerisation von Propylen 640 g Polymergrieß, was einer Produktivität von 850 g PP/g Katalysator h entspricht. Die zugehörigen Polymerdaten sind in Tabelle 3 aufgelistet.

### Beispiel 19

19.1 Herstellung des Katalysators
   250 g Kieselgel SG 332 wurden im Vakuum 8 h bei 180°C partiell dehydratisiert, in 250 ml iso-Dodekan suspendiert und anschließend innerhalb von 8 h 2 l 1.53 M MAO (Toluollösung) bei 25°C langsam zugetropft. Nach 12 h bei 25°C wurde die überstehende farblose Lösung abfiltriert und der MAO-beladene Träger mit 3 x 1 l Toluol und anschließend mit 2 x 1 l iso-Dodekan gewaschen. Das MAO-beladene Kieselgel wurde in 4,5 l iso-Dodekan resuspendiert und innerhalb von 8 Stunden mit einer Lösung von 11,69 g rac-Bis-[3,3'-(2-Methylbenzo[e]indenyl)]dimethylsilandiylzirkoniumdichlorid in 2,63 l 1,53 M MAO (Toluollösung) versetzt. Nach 1,5 h wurde der geträgerte Katalysator durch Filtration isoliert, mit 2 x 1 l Pentan gewaschen und im N₂-Strom bei 25°C getrocknet. Die Ausbeute beträgt 385 g.
19.2 Polymerisation im kontinuierlichen 200 l-Gasphasenreaktor
   Die Polymerisation wurde in einem vertikal durchmischten Gasphasenreaktor mit einem Nutzvolumen von 200 l durchgeführt. Der Reaktor enthielt ein bewegtes Festbett aus feinteiligem Polymerisat. Der Reaktorausstoß betrug in allen Fällen 20 kg Polypropylen pro Stunde.
   In den Gasphasenreaktor wurde bei einem Druck von 24 bar und einer Temperatur von 60°C flüssiges Propylen entspannt. Bei einer mittleren Verweilzeit von 2,5 Stunden wurde das beschriebene Katalysatorsystem kontinuierlich polymerisiert. Die Dosierung des Katalysators erfolgte zusammen mit dem zur Druckregelung zugesetzten Propylen. Die zudosierte Katalysatormenge wurde so bemessen, daß der mittlere Ausstoß von 20 kg/h aufrecht erhalten wurde. Ebenfalls zudosiert wurde Triisobutylaluminium in einer Menge von 30 mmol/h als 1 molare Lösung in Heptan. Durch kurzzeitiges Entspannen des Reaktors über ein Tauchrohr wurde sukzessive Polymer aus dem Reaktor entfernt. Die Berechnung der Produktivität erfolgte aus dem Siliciumgehalt der Polymeren nach der folgenden Formel:

   P = Si-Gehalt des Katalysators/Si-Gehalt des Produkts

   Die verfahrenstechnischen Parameter und charakteristischen Produkteigenschaften gehen aus Tabelle 4 hervor.

### Beispiel 20

Die Präparation des Katalysators erfolgte analog zu Beispiel 19 und die Polymerisation im kontinuierlichen 200 l-Gasphasenreaktor wurde analog zu Beispiel 19.2 durchgeführt, wobei als Molekulargewichtsregler Wasserstoff zugesetzt wurde. Die Wasserstoffkonzentration im Reaktionsgas betrug 0,08 Vol.-% und wurde gaschromatographisch ermittelt.

Die verfahrenstechnischen Parameter und charakteristischen Produkteigenschaften gehen aus Tabelle 4 hervor.

### Beispiel 21

Die Präparation des Katalysators und die Polymerisation im kontinuierlichen 200 l-Gasphasenreaktor erfolgte analog zu Beispiel 20. Die Wasserstoffkonzentration im Reaktionsgas betrug 0,115 Vol.-% und wurde gaschromatographisch ermittelt.

Die verfahrenstechnischen Parameter und charakteristischen produkteigenschaften gehen aus Tabellen 4 hervor.

### Beispiel 22

22.1 Herstellung des Katalysators
   10 g sprühgetrocknetes Kieselgel (Teilchendurchmesser: 20 bis 45 µm; spezifische Oberfläche: 325 m²/g; Porenvolumen: 1,50 cm³/g) wurden im Vakuum 8 Stunden lang bei 180°C dehydratisiert, danach in 40 ml Toluol suspendiert und anschließend mit 78 ml 1,53 M Methylalumoxan (Toluollösung) bei 25°C versetzt. Nach 12 Stunden wurde innerhalb von 4 h 150 ml iso-Dodekan langsam zugegeben und weitere 1,5 h bei 25°C gerührt. Anschließend wurde das mit Methylalumoxan desaktivierte Kieselgel abfiltriert, zweimal mit je 20 ml Toluol und zweimal mit je 20 ml Pentan gewaschen und im Stickstoffwirbelstrom getrocknet.
   Das MAO-beladene Kieselgel wurde zu einer Mischung von 525 mg Bis-[3,3'-(-2-Methyl-benzo[e]indenyl)]dimethylsilandiylzirkoniumdichlorid und 120 ml 1,53 M Methylalumoxanlösung (in Toluol) gegeben und bei 25°C gerührt. Nach 20 h wurde innerhalb von 4 h 250 ml iso-Dodekan langsam zugegeben und weitere 1,5 h gerührt. Anschließend wurde der Feststoff abfiltriert, zweimal mit je 20 ml Pentan gewaschen und im Stickstoffwirbelstrom getrocknet. Die Ausbeute am geträgerten Katalysator betrug 16,8 g.
22.2 Polymerisation von Propylen
   Die Polymerisation wurde analog zu Bsp. 1.2 durchgeführt. 84 mg geträgerter Katalysator lieferten bei der Polymerisation 1100 g Polymergries, was einer Produktivität von 12500 g PP/g Katalysator h entspricht.

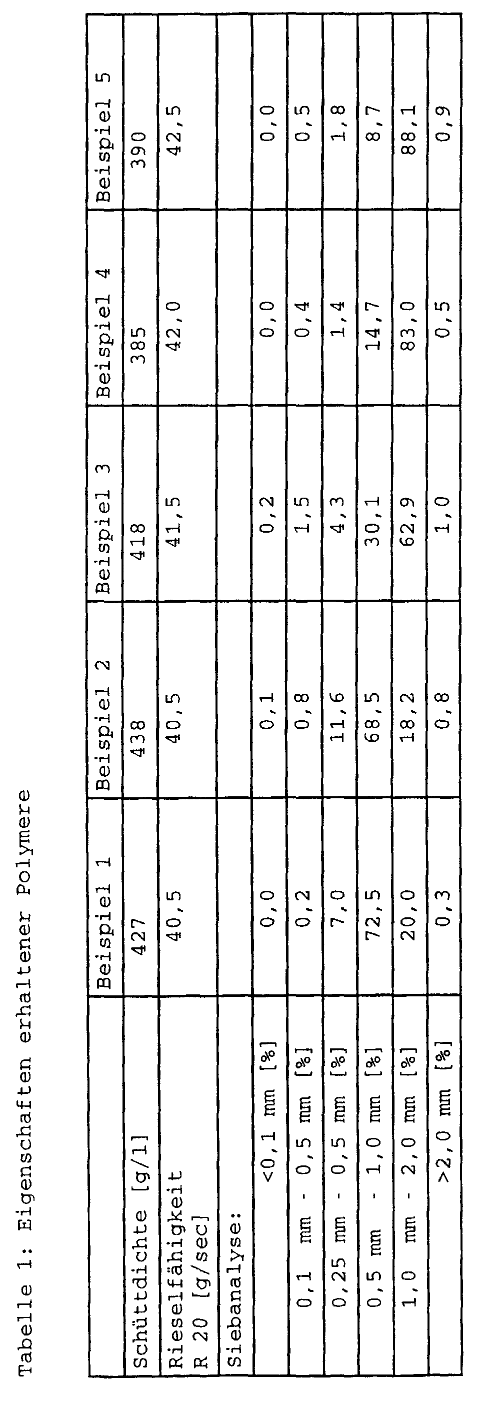

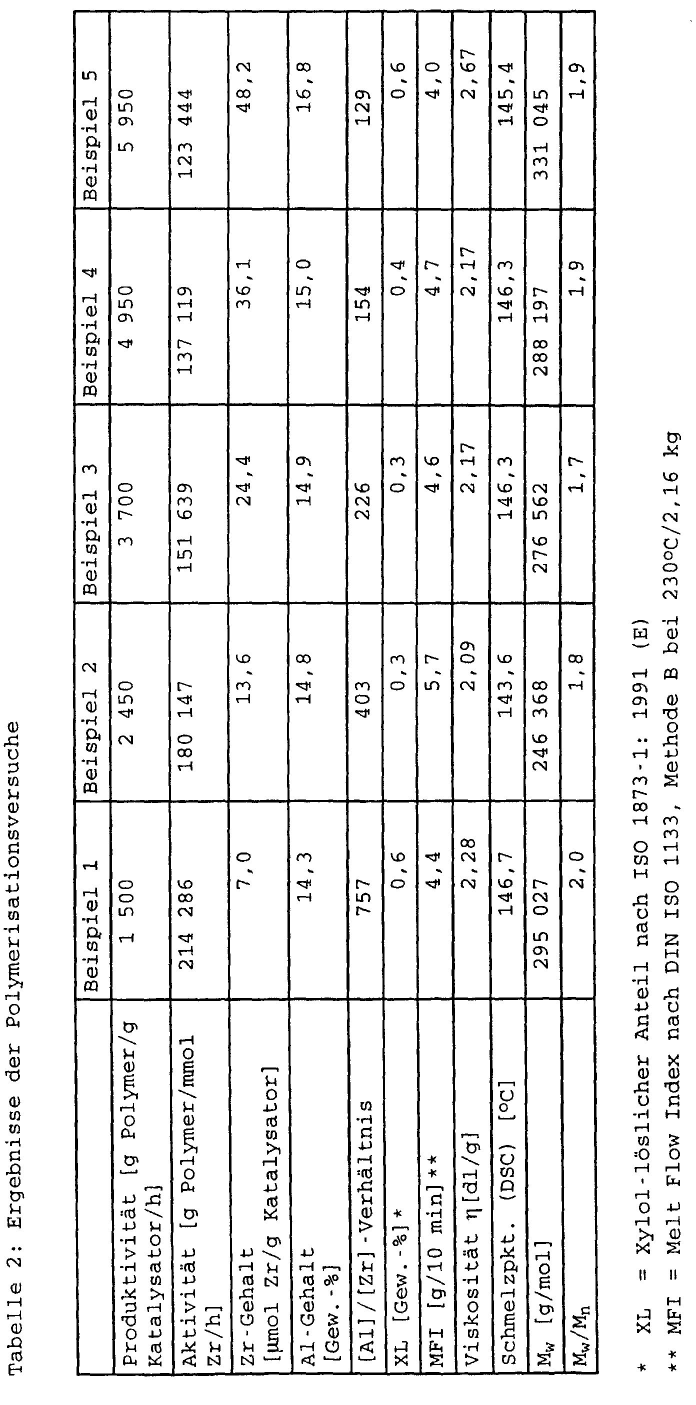

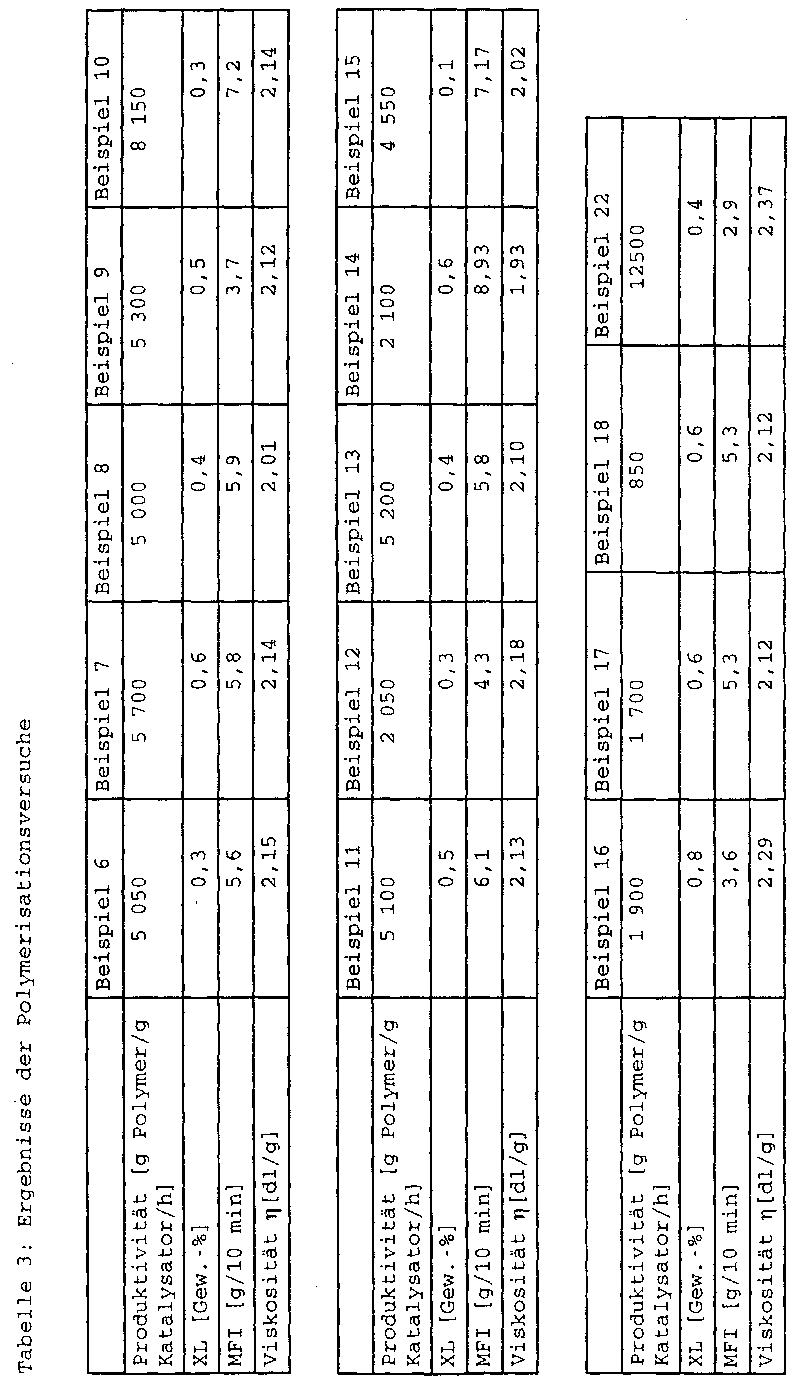

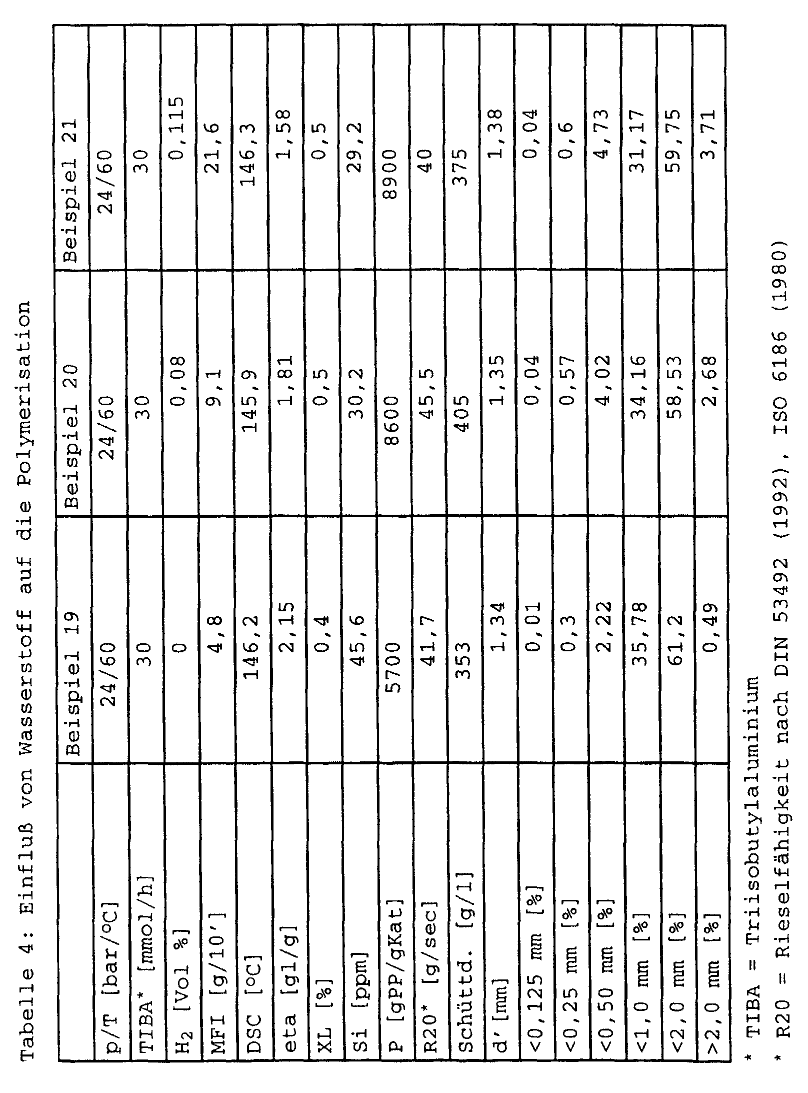

## Patentansprüche

1. Verfahren zur Herstellung eines geträgerten Übergangsmetallkatalysators, welcher ein partikuläres organisches oder anorganisches Trägermaterial, einen Metallocenkomplex und eine metalloceniumionen-bildende Verbindung enthält, dadurch gekennzeichnet, daß es die folgenden Verfahrensschritte umfaßt:
a) Kontaktierung einer Lösung einer metalloceniumionen-bildenden Verbindung mit einem zweiten Lösungsmittel, in welchem diese Verbindung so wenig löslich ist, daß der größte Teil dieser Verbindung durch das Lösungsmittel ausfällbar ist, in Gegenwart des Trägermaterials,
b) Entfernung zumindest eines Teils der Lösungsmittel vom Trägermaterial und
c) Kontaktierung einer Lösung eines Gemisches einer metalloceniumionen-bildenden Verbindung und eines Übergangsmetallkomplexes mit einem zweiten Lösungsmittel, in welchem dieses Gemisch so wenig löslich ist, daß der größte Teil dieses Gemisches durch das Lösungsmittel ausfällbar ist, in Gegenwart des nach a) und b) erhaltenen Trägermaterials.

2. Verfahren nach Anspruch 1, dadurch gekennzeichnet, daß als metalloceniumionen-bildende Verbindung offenkettige oder cyclische Alumoxanverbindungen der allgemeinen Formel I oder II 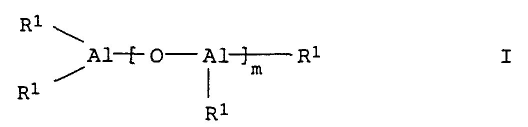 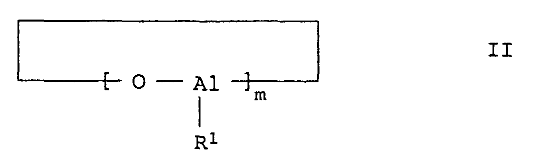 wobei R¹ eine C₁- bis C₄-Alkylgruppe bedeutet und m für eine ganze Zahl von 5 bis 30 steht, eingesetzt werden.

3. Verfahren nach den Ansprüchen 1 und 2, dadurch gekennzeichnet, daß als Übergangsmetallkomplexe Metallocenkomplexe von Elementen der 4. und 5. Nebengruppe des Periodensystems eingesetzt werden.

4. Verfahren nach den Ansprüchen 1 bis 3, dadurch gekennzeichnet, daß als Übergangsmetallkomplexe solche mit Benzindenylliganden eingesetzt werden.

5. Verfahren nach den Ansprüchen 1 bis 4, dadurch gekennzeichnet, daß die Übergangsmetallkomplexe zwei miteinander verbrückte aromatische Ringsysteme als Liganden enthalten.

6. Verfahren nach den Ansprüchen 1 bis 5, dadurch gekennzeichnet, daß im Verfahrensschritt b) zumindest ein Teil der Lösungsmittel durch Filtration des Trägermaterials entfernt wird.

7. Verfahren nach den Ansprüchen 1 bis 5, dadurch gekennzeichnet, daß im Verfahrensschritt b) zumindest ein Teil der Lösungsmittel durch Destillation entfernt wird.

8. Verfahren nach den Ansprüchen 1 bis 6, dadurch gekennzeichnet, daß das Trägermaterial vor dem Verfahrensschritt c) mit einem Lösungsmittel, in welchem die metalloceniumionen-bildende Verbindung gut löslich ist, gewaschen wird.

9. Geträgerter Katalysator erhältlich nach einem Verfahren gemäß den Ansprüchen 1 bis 8.

10. Verfahren zur Herstellung von Polymerisaten von C₂-C₁₂-Alk-1-enen bei Temperaturen im Bereich von -50 bis 300°C und Drücken von 0,5 bis 3000 bar in Gegenwart eines Katalysators gemäß Anspruch 9.

## Claims

1. A process for preparing a supported transition metal catalyst comprising a particulate organic or inorganic support material, a metallocene complex and a compound capable of forming metallocenium ions, which comprises the following process steps:
a) contacting a solution of a compound capable of forming metallocenium ions with a second solvent in which this compound is so sparingly soluble that the major part of this compound can be precipitated by the solvent, in the presence of the support material,
b) removing at least part of the solvent from the support material and
c) contacting a solution of a mixture of a compound capable of forming metallocenium ions and a transition metal complex with a second solvent in which this mixture is so sparingly soluble that the major part of this mixture can be precipitated by the solvent, in the presence of the support material obtained as described in a) and b).

2. A process as claimed in claim 1, wherein the compound capable of forming metallocenium ions which is used comprises open-chain or cyclic aluminoxane compounds of the general formula I or II 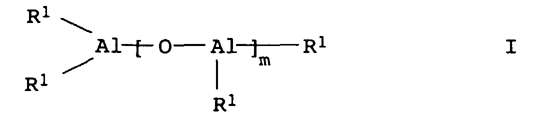 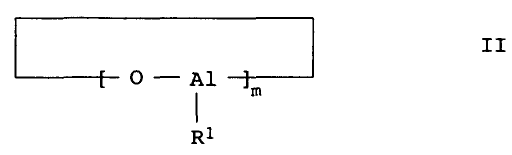 where R¹ is C₁-C₄-alkyl and m is an integer from 5 to 30.

3. A process as claimed in claim 1 or 2, wherein transition metal complexes used are metallocene complexes of elements of the 4th and 5th transition groups of the Periodic Table.

4. A process as claimed in any of claims 1 to 3, wherein the transition metal complexes used are ones having benzindenyl ligands.

5. A process as claimed in any of claims 1 to 4, wherein the transition metal complexes contain two aromatic ring systems bridged to one another as ligands.

6. A process as claimed in any of claims 1 to 5, wherein, in process step b), at least part of the solvent is removed by filtration of the support material.

7. A process as claimed in any of claims 1 to 5, wherein, in process step b), at least part of the solvent is removed by distillation.

8. A process as claimed in any of claims 1 to 6, wherein the support material is, before the process step c), washed with a solvent in which the compound capable of forming metallocenium ions is readily soluble.

9. A supported catalyst obtainable by a process as claimed in any of claims 1 to 8.

10. A process for preparing polymers of C₂-C₁₂-alk-1-enes at from -50 to 300°C and pressures of from 0.5 to 3000 bar in the presence of a catalyst as claimed in claim 9.

## Revendications

1. Procédé pour la préparation d'un catalyseur à base de métaux de transition sur support, comprenant une matière de support organique ou minérale en particules, un complexe de métallocène et un composé formant des ions métallocénium, caractérisé par le fait qu'il comprend les stades opératoires suivants :
a) mise en contact d'une solution d'un composé formant des ions métallocénium avec un deuxième solvant dans lequel ce composé est suffisamment peu soluble pour que la plus grande partie de ce composé puisse être précipitée par le solvant, en présence de la matière de support,
b) élimination d'une partie au moins du solvant contenu dans la matière de support et
c) mise en contact d'une solution d'un mélange d'un composé formant des ions métallocénium et d'un complexe de métal de transition avec un deuxième solvant dans lequel ce mélange est suffisamment peu soluble pour que la plus grande partie de ce mélange puisse être précipitée par le solvant, en présence de la matière de support obtenue en a) et b) ci-dessus.

2. Procédé selon la revendication 1, caractérisé par le fait que l'on utilise, en tant que composés formant des ions métallocénium, des dérivés d'alumoxanes acycliques ou cycliques de formule générale I ou II 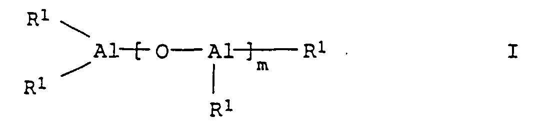 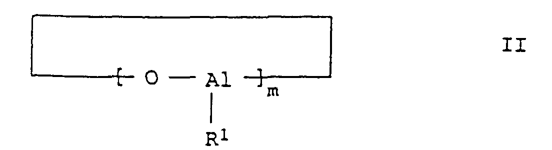 dans lesquelles R¹ représente un groupe alkyle en C1-C4 et m est un nombre entier allant de 5 à 30.

3. Procédé selon les revendications 1 et 2, caractérisé par le fait que l'on utilise, en tant que complexes de métaux de transition, des complexes de métallocènes d'éléments du quatrième et du cinquième sous-groupe de la Classification Périodique.

4. Procédé selon les revendications 1 à 3, caractérisé par le fait que l'on utilise des complexes de métaux de transition à ligands benzindényle.

5. Procédé selon les revendications 1 à 4, caractérisé par le fait que les complexes de métaux de transition contiennent en tant que ligands deux systèmes cycliques aromatiques reliés entre eux par un pont.

6. Procédé selon les revendications 1 à 5, caractérisé par le fait que, au stade opératoire b), on élimine une partie au moins des solvants par filtration de la matière de support.

7. Procédé selon les revendications 1 à 5, caractérisé par le fait que, au stade opératoire b), on élimine une partie au moins des solvants par distillation.

8. Procédé selon les revendications 1 à 6, caractérisé par le fait que, avant le stade opératoire c), la matière de support est lavée à l'aide d'un solvant dans lequel le composé formant des ions métallocénium est bien soluble.

9. Catalyseur sur support obtenu par un procédé selon les revendications 1 à 8.

10. Procédé de préparation de polymères d'alcènes-1 en C2-C12 à des températures dans l'intervalle de -50 à +300°C et des pressions de 0,5 à 3000 bar, en présence d'un catalyseur selon la revendication 9.
